# EUROPEAN PATENT APPLICATION

(11) **EP 4 697 444 A1**
(43) Date of publication of application: **18.02.2026**
(21) Application number: 24843454.0
(22) Date of filing: 15.07.2024
(51) Int. Cl.: H01M 10/42, H01M 4/134, H01M 4/131, H01M 4/525, H01M 4/505, H01M 10/0569, H01M 10/052, H01M 4/66, H01M 4/02

(54) **ELECTROLYTE FOR LITHIUM METAL BATTERY AND LITHIUM METAL BATTERY COMPRISING SAME**

(30) Priority: 17.07.2023 KR 20230092582; 27.05.2024 KR 20240068576
(71) Applicant: LG Energy Solution, Ltd., Seoul 07335 (KR); Korea Advanced Institute of Science and Technology, Daejeon 34141 (KR)
(72) Inventor: KIM, Hee-Tak, Daejeon 34141 (KR); KWON, Hyeokjin, Daejeon 34141 (KR)
(74) Representative: Hoffmann Eitle
(86) International application number: PCT/KR2024/010082
(87) International publication number: WO 2025/018738

(57) **Abstract**

The present disclosure relates to a negative electrode for a lithium metal secondary battery which can decrease the loss of lithium caused by side reactions with an electrolyte and improve the lifetime characteristics of the lithium metal secondary battery, and a lithium metal secondary battery comprising the same.

## Description

### [TECHNICAL FIELD]

### Cross-Reference to Related Applications

This application claims priority to and the benefit of Korean Patent Application No. 10-2023-0092582, filed on July 17, 2023, and Korean Patent Application No. 10-2024-0068576, filed on May 27, 2024, with the Korean Intellectual Property Office, the disclosures of which are incorporated herein in their entirety by reference.

The present disclosure relates to a negative electrode for a lithium metal secondary battery which can decrease the loss of lithium caused by side reactions with an electrolyte and improve the lifetime characteristics of the lithium metal secondary battery, and a lithium metal secondary battery comprising the same.

### [BACKGROUND]

Lithium metal secondary battery is a battery to which a negative electrode active material made from lithium metal (Li-metal) material is applied, and has the advantage of having a theoretically very high energy density and capacity as compared with a battery to which a graphite-based or lithium alloy-based negative electrode is applied according to the prior art. Thus, research and development are ongoing to apply such a lithium metal secondary battery to a battery that requires a high energy density.

A conventional negative electrode for a lithium metal secondary battery have not been commercialized due to its high irreversibility and poor lifetime characteristics caused by dendritic growth of lithium during a charging process. In the charging process of a lithium, there are two lithium loss paths: lithium electrodeposited on the negative electrode is short-circuited electrically to lose lithium; and lithium and electrolyte are reacted due to the expanded lithium surface area to lose lithium, and if lithium grows in a dendritic form, these problems can be accelerated. As a result, conventional lithium metal secondary batteries have the disadvantage of exhibiting poor lifetime characteristics due to the continuous loss of lithium acting as the negative electrode active material.

Meanwhile, in the field of research into electrolytes for lithium metal secondary batteries, research has been conducted in the direction of forming a good oxide film on the surface of the negative electrode through the reaction with lithium metal, thereby controlling the uniform growth of lithium metal and minimizing lithium that is short-circuited electrically.

However, according to recent research results, since the electrolytes as above basically form an oxide coating film through high reactivity with lithium metal, the second loss path of lithium, i.e., the loss volume of lithium associated with a reaction between lithium and the electrolyte, accounts for a significant proportion. For this reason, even if recently developed electrolytes are used, the lithium metal secondary battery still has the disadvantage of exhibiting insufficient lifetime characteristics due to the continuous loss of lithium, especially, loss of lithium caused by side reactions between the electrolyte and lithium.

### [DETAILED DESCRIPTION OF THE INVENTION]

### [Technical Problem]

Thus, it is an object of the present disclosure to provide a negative electrode for a lithium metal secondary battery which can decrease the loss of lithium caused by side reactions with an electrolyte and improve the lifetime characteristics of the lithium metal secondary battery.

It is another object of the present disclosure to provide a lithium metal secondary battery comprising the negative electrode and thus exhibiting improved lifetime characteristics.

### [Technical Solution]

According to an aspect of the present disclosure, there is provided a negative electrode for a lithium metal secondary battery comprising:
a conductive metal layer including a first metal;
an interface layer formed on the conductive metal layer, and including a second metal oxide having a work function larger than that of the first metal; and
a lithium metal layer formed on the interface layer and having a surface work function greater than 3.0 eV.

According to another aspect of the present disclosure, there is provided a lithium metal secondary battery comprising: the negative electrode; a positive electrode facing the negative electrode; an electrolyte including a lithium salt and a non-aqueous organic solvent; and a separator between the positive electrode and the negative electrode.

### [Advantageous Effects]

A negative electrode for a lithium metal secondary battery of the present disclosure forms an interface layer containing a metal oxide having a large work function on a conductive metal layer acting as a current collector, and forms a lithium metal layer having a relatively thin thickness on this interface layer.

In this negative electrode, it was confirmed that the surface work function of the lithium metal layer can be controlled to be relatively large, and as a result, the surface reactivity of the lithium metal layer may become low. Due to the low surface reactivity of the lithium metal layer, the reactivity with the electrolyte becomes low, and a thinner oxide film (solid electrolyte interphase) can be formed on the negative electrode.

This can result in decreasing the loss of lithium caused by the reaction between the electrolyte and the lithium metal layer, and can further improve the lifetime characteristics of the lithium metal secondary battery.

### [BRIEF DESCRIPTION OF THE DRAWINGS]

FIG. 1 is a graph showing the work function and band gap of various metal oxides.
FIG. 2 shows the results of evaluating the surface work function of the lithium metal layer (i.e., Li deposits) in the negative electrodes of Examples, Comparative Examples, and Reference Examples.
FIG. 3 shows the results of TEM analysis of the lithium metal layer electrodeposited and formed in the negative electrode manufacturing process of Comparative Example 2 and the solid electrolyte interphase on its surface.
FIG. 4 shows the results of evaluating the capacity retention of lithium metal secondary batteries (lithium-free secondary batteries) including the negative electrodes of Examples and Comparative Examples.

### [DETAILED DESCRIPTION OF THE EMBODIMENTS]

Throughout the specification, when a part is referred to as "including" a certain component, it means that it can further include other components, without excluding the other components, unless otherwise stated.

The term "about or approximately" or "substantially" used herein is intended to have meanings close to numerical values or ranges specified with an allowable error and intended to prevent accurate or absolute numerical values disclosed for understanding of the present disclosure from being illegally or unfairly used by any unconscionable third party. Further, the term "step of̃" as used throughout the specification does not mean "step for~".

Throughout the specification, the term "combination(s) thereof" included in Markush type description means mixture or combination of one or more selected from a group consisting of components described in Markush type, and thereby means including one or more selected from a group consisting of the components.

In addition, through the specification, the term "lithium metal secondary battery" may be defined as any secondary battery that utilizes "lithium metal" as a negative electrode active material. The category of such "lithium metal secondary batteries" may include, for example, a secondary battery including a negative electrode manufactured by forming a lithium metal layer on a negative electrode current collector including a conductive metal layer and a metal oxide-containing interface layer, as well as a battery referred to as a "lithium-free secondary battery" or "anode-free secondary battery".

Such a "lithium-free secondary battery" or "anode-free secondary battery" may refer to a secondary battery in which, in the state before charge and discharge, for example, in the state right after manufacture, a separate lithium metal layer, lithium alloy layer, or other negative electrode active material layer do not exist on the negative electrode current collector including the conductive metal layer and the interface layer. Such a "lithium-free secondary battery" or "anode-free secondary battery" can have a lithium metal layer electrodeposited and formed on the negative electrode current collector in the charge and discharge process, and such lithium metal layer can act as a negative electrode active material. Therefore, such a "lithium-free secondary battery" or "anode-free secondary battery" may also fall into the category of "lithium metal secondary batteries" that utilize lithium metal as a negative electrode active material.

Based on the definitions as described above, embodiments of the present disclosure will be described in detail. However, these embodiments are presented for illustrative purposes only, and the scope of the present disclosure is not limited thereto, and the present disclosure is only defined by the scope of the claims described hereinafter.

According to an embodiment of the present disclosure, there is provided a negative electrode for a lithium metal secondary battery comprising:
a conductive metal layer including a first metal;
an interface layer formed on the conductive metal layer, and including a second metal oxide having a work function larger than that of the first metal; and
a lithium metal layer formed on the interface layer and having a surface work function greater than 3.0 eV.

In the negative electrode of one embodiment, an interface layer containing a second metal oxide having a larger work function, for example, a metal oxide having a work function of 6.0 eV or more, is formed on a conductive metal layer that acts as a negative electrode current collector, for example, a conductive metal layer containing a first metal such as copper. In addition, a lithium metal layer which acts as a negative electrode active material is formed on such an interface layer. This lithium metal layer may be formed separately during the manufacturing process of a lithium metal secondary battery, or may be electrodeposited and formed during charging and discharging of the secondary battery.

In this case, the work function of the metal or metal oxide may be defined as the minimum thermodynamic energy(eV) required to remove one electron from the surface of the solid metal or metal oxide, and can be measured and calculated from the results of analyzing the solid-state material by UPS (Ultraviolet Photoelectron Spectroscopy).

As a result of experiments by the present inventors, it has been confirmed that as a metal oxide-containing interface layer having a large work function is formed between the conductive metal layer and the lithium metal layer, the surface work function of the lithium metal layer can be controlled to be relatively large. In addition, as described in more detail below, it has been confirmed that as the conditions for forming the lithium metal layer is adjusted to form a thinner lithium metal layer, the surface work function of the lithium metal layer can be further increased.

Such a large surface work function means that a large amount of energy is required to remove electrons from the lithium metal layer, and due to this large work function, the reaction between the lithium metal layer formed on the second metal oxide-containing interface layer and the electrolyte can be suppressed. Due to this low surface reactivity of the lithium metal layer, the reactivity with the electrolyte is reduced, and a thinner oxide film (solid electrolyte interphase) can be formed on the negative electrode.

As a result, the loss volume of lithium due to the reaction between the electrolyte and the lithium metal layer can be significantly decreased, and the lifetime characteristics of the lithium metal secondary battery can be further improved.

Meanwhile, in the negative electrode for the lithium metal secondary battery according to an embodiment, the conductive metal layer can have a thickness equivalent to that of a general negative electrode current collector, for example, a thickness of 3 to 500 µm, or 5 to 100 µm, or 7 to 30 µm.

Further, the first metal forming the conductive metal layer is a metal that has relatively low reactivity and high conductivity without causing any chemical change in the battery, and can be formed by using any metal previously known to be usable as a negative electrode current collector, and can be formed using any metal that has been previously known to be usable as a negative electrode current collector.

Specific examples thereof include metals such as stainless steel, aluminum, nickel, titanium or copper, or copper, aluminum or stainless steel whose surface is treated with carbon, nickel, titanium, silver, or the like. This conductive metal layer can be formed in various forms such as a film, a sheet, a foil, a net, a porous body, a foaming body, and a non-woven fabric structure. However, taking into consideration the excellent conductivity and lightweight property of the negative electrode current collector and the negative electrode, the appropriate work function difference and low reactivity with the second metal oxide, and the like, the first metal may include copper(Cu), and more specifically, it may be made of a copper foil.

Such a conductive metal layer containing copper may have a work function of, for example, 4.53 to 5.10 eV, 4.55 to 4.90 eV, or 4.55 to 4.65 eV.

Further, an interface layer containing a second metal oxide may be formed on at least one surface of the conductive metal layer. As already mentioned above, it was confirmed that as the second metal oxide has a work function larger than that of the first metal of the conductive metal layer, the surface work function of the lithium metal layer formed on the interface layer can be further increased, and the reactivity between the lithium metal layer and the electrolyte can be reduced.

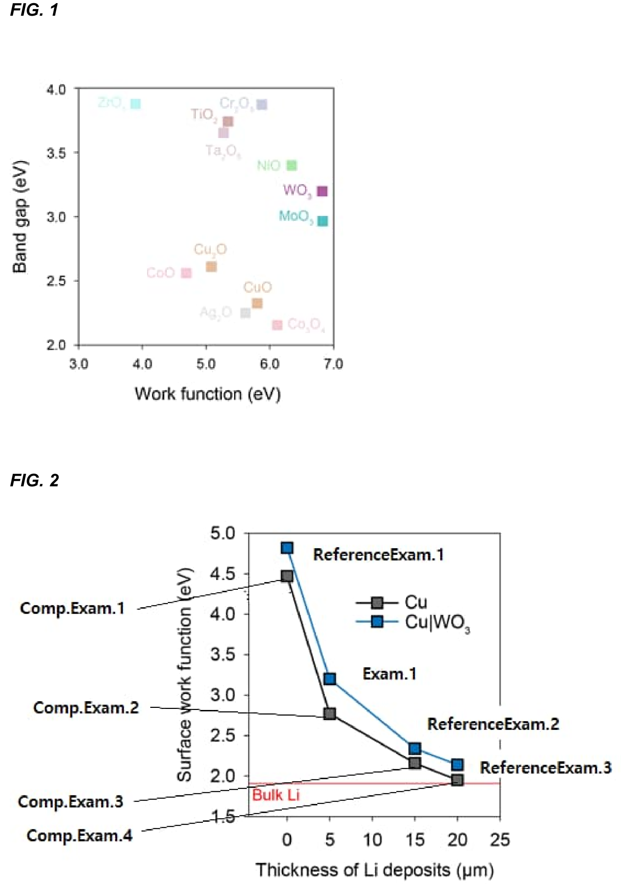

More specifically, the second metal oxide may have a work function of 6.0 eV or more, or 6.0 to 7.0 eV, or 6.0 to 6.5 eV, and a band gap of 2.7 eV or more, or 2.7 to 3.5 eV. In this case, the band gap can be defined as the minimum amount of energy that is required for an electron to break free of its bound state in each metal oxide. For reference, the work function and band gap of various metal oxides are illustrated in FIG. 1.

By forming an interface layer with a second oxide having the above-mentioned work function and band gap, the surface work function of the lithium metal layer can be further increased, and the reactivity with the electrolyte can be lowered, thereby further decreasing the loss volume of lithium.

In consideration of the appropriate work function and band gap range, etc., the second metal oxide may include nickel oxide(NiO), molybdenum oxide(MoO₃), or tungsten oxide(WO₃). Among these, tungsten oxide can be used to further reduce side reactions between the lithium metal layer and the electrolyte in a lithium metal secondary battery, and further improve the lifetime characteristics of the secondary battery.

The interface layer containing the second metal oxide may have a thickness of, for example, 10 nm to 1 µm, or 10 to 500 nm, or 10 to 200 nm, in order to effectively suppress the reactivity of the lithium metal layer while not impairing the excellent conductivity and lightweight property of the negative electrode.

Further, the formation method of the interface layer containing the second metal oxide is not particularly limited, and the second metal oxide layer may be formed by any method of coating a metal oxide onto a conductive metal layer. In a specific embodiment, the interface layer may be formed by thermally evaporating a second metal oxide on the conductive metal layer. This thermal evaporation can be formed to an appropriate evaporation thickness while monitoring the evaporation thickness and evaporation speed of the second metal oxide in real time using a quartz crystal microbalance(QCM).

Meanwhile, in the negative electrode of one embodiment, a lithium metal layer having a surface work function exceeding 3.0 eV, for example, a surface work function of 3.0 to 4.5 eV, or 3.1 to 4.0 eV, may be formed on the above-mentioned interface layer.

As the lithium metal layer is formed on the second metal oxide-containing interface layer having the above-mentioned large work function, it can have a larger surface work function than a general lithium metal layer or a lithium metal layer formed directly on a conductive metal layer such as a copper current collector.

Furthermore, as confirmed through the following embodiments, etc., the lithium metal layer may have a thinner thickness, for example, a thickness of 10 nm to 10 µm, on the interface layer. More specifically, the lithium metal layer may be a lithium nuclei-containing layer formed to a thickness of 10 nm to 1 µm, or 20 nm to 700 nm, or a lithium metal electrodeposition layer formed to a thickness of 3 µm to 10 µm, or 4 µm to 9 µm. Even in any case, it was confirmed that as the lithium metal layer is formed to a thinner thickness, it can have a higher work function. Due to this larger surface work function, the lithium metal layer may exhibit low reactivity with the electrolyte, and the thickness of the solid electrolyte interface film formed on the negative electrode may be made thinner. Therefore, a lithium metal secondary battery including the negative electrode of one embodiment may exhibit excellent lifetime characteristics due to reduction of lithium loss volume.

In order to form the lithium metal layer in a thinner thickness, the lithium metal layer may be electrodeposited and formed on the interface layer at a low capacity of, for example, 1.0 to 2.5 mAh/cm², or 1.0 to 2.0 mAh/cm².

Meanwhile, the lithium metal layer may be formed on the interface layer during the manufacturing process of the negative electrode and lithium metal secondary battery of one embodiment, but may also be formed during the charge/discharge process after the manufacture of the lithium metal secondary battery.

In such a configuration, a lithium metal secondary battery including a negative electrode of one embodiment may have the form of a lithium-free secondary battery that does not include a separate lithium metal layer or negative electrode active material layer in the state immediately after manufacture. However, as the lithium metal secondary battery is charged and discharged, lithium ions moved from the positive electrode may be electrodeposited on the interface layer of the negative electrode to form a lithium metal layer, and this lithium metal layer may act as a negative electrode active material.

Meanwhile, according to another embodiment of the disclosure, there is provided a lithium metal secondary battery comprising the negative electrode of one embodiment described above. For example, the lithium metal secondary battery may include the negative electrode of one embodiment described above; a positive electrode facing the negative electrode; an electrolyte including a lithium salt and a non-aqueous organic solvent; and a separator between the positive electrode and the negative electrode.

The battery of another embodiment includes a lithium metal layer having a large surface work function, and thus can decrease the loss volume of lithium during charging and discharging and exhibit excellent lifetime characteristics. Since the negative electrode of one embodiment has been described in detail above, the remaining configuration excluding the negative electrode will be mainly described hereinafter.

In the lithium metal secondary battery of another embodiment, the positive electrode may include a positive electrode current collector and a positive electrode active material layer located on the positive electrode current collector.

Such a positive electrode can be manufactured by mixing an active material and a binder, and optionally, a conductive material, a filler, or the like in a solvent to prepare a positive electrode slurry composition, and coating the slurry composition onto a positive electrode current collector.

The positive electrode current collector is typically produced to have a thickness of 3 to 500 µm. The positive electrode current collector is not particularly limited as long as it has high conductivity without causing a chemical change in the battery, and for example, may be formed of stainless steel, aluminum, nickel, titanium, baked carbon, or aluminum, or a material formed by surface-treating a surface of stainless steel with carbon, nickel, titanium, silver, or the like. The current collector may have fine protrusions and depressions formed on a surface thereof to enhance adherence of a positive electrode active material, and may be formed in various forms such as a film, a sheet, a foil, a net, a porous body, a foaming body, and a non-woven fabric structure.

Further, the positive electrode active material is a compound capable of reversible intercalation and deintercalation of lithium, and specifically, it may include lithium metal oxide containing lithium and at least one metal such as iron, cobalt, manganese, nickel or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}MnyO₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5 ≤ a ≤ +0.5, 0 ≤ x ≤ 0.5, 0 ≤ b ≤ 0.1), or the like, and any one thereof or a mixture of two or more thereof may be used.

Among these, the positive electrode active material includes lithium; and lithium metal oxide containing two or more transition metals selected from the group consisting of nickel, manganese, cobalt, and aluminum, wherein the lithium metal oxide may contain nickel in an amount of 50 mol % or more, or 60 to 99 mol %, or 70 to 95 mol % based on the total transition metal content excluding lithium. Such a lithium metal oxide may be represented, for example, by the following Chemical Formula 1:

[Chemical Formula 1] LiₓNiₐCoₚM¹_{c}M²_{d}O₂

wherein in Chemical Formula 1, the M¹ may be one or more selected from Mn and Al, or a combination thereof, M² may be one or more selected from the group consisting of Zr, B, W, Mg, Ce, Hf, Ta, La, Ti, Sr, Ba, F, P and S, 0.90≤x≤1.1, or 0.95≤x≤1.08, or 1.0≤x≤1.08, and 0.50≤a<1.0, or 0.60≤a≤0.99, or 0.70≤a≤0.9. Further, 0<b≤0.3, 0<c≤0.3, and 0≤d≤0.1.

The lithium metal oxide containing such a high content of nickel is used as a positive electrode active material, and this is combined with the negative electrode of one embodiment, so that the output, capacity characteristics, life characteristics, etc. of the lithium metal secondary battery can be further improved.

The above-mentioned positive electrode active material may be contained in an amount of 60 to 99% by weight, or 70 to 99% by weight, or 80 to 98% by weight, based on the total weight of the positive electrode active material layer.

Meanwhile the conductive material contained in the positive electrode active material layer is a component for further improving the conductivity of the composite positive electrode active material. Such a conductive material is not particularly limited as long as it has conductivity without causing any chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such as polyphenylene derivatives, may be used. Among these, the conductive material includes conductive nanomaterials such as carbon nanotubes or carbon nanofibers, which can further lower the resistance of the lithium-free secondary battery and further enhance output characteristics.

Typically, the conductive material may be contained in an amount of 1 to 20% by weight, or 1 to 15% by weight, or 1 to 10% by weight, based on the total weight of the positive electrode active material layer.

The binder selectively included in the positive electrode active material layer is a component that assists in the bonding between the positive electrode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20% by weight, or 1 to 15% by weight, or 1 to 10% by weight based on the total weight of the positive electrode active material layer.

In addition, a filler may be optionally added to the positive electrode as a component for inhibiting the expansion thereof. Such a filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

The above-mentioned positive electrode can be prepared, for example, by dispersing and mixing the positive electrode active material, the binder, the conductive material and the like in a dispersion medium (solvent) to form a slurry, and coating the slurry onto a metal current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Meanwhile, the lithium metal secondary battery of the other embodiments further includes an electrolyte containing a non-aqueous organic solvent and a lithium salt.

The lithium salt contained in the electrolyte is used as a medium for transferring ions within a secondary battery. For example, the lithium salt may include Li⁺ as a cation, and may together include an anion selected from the group consisting of F⁻, Cl⁻, Br, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂ and LiTFSI (lithium bis(trifluoromethanesulfonyl) imide, LiN(SO₂CF₃)₂).

The concentration of the lithium salt can be appropriately changed within the normally usable range, and may be included in the electrolyte at a concentration of 1M to 6M, or at a concentration of 1.5M to 5M.

In a more specific example, the electrolyte may include the lithium salt at a relatively low concentration of 0.5M or more and less than 2M, or 0.7M to 1.5M, but may include the lithium salt at a high concentration of 2M to 6M, or 2.5M to 5.5M. By using an electrolyte containing such a high concentration of lithium salt, the output characteristics of the secondary battery can be further improved. In addition, when the electrolyte including the high-concentration lithium salt is used in combination with the negative electrode of one embodiment, it is possible to decrease the loss volume of lithium due to the reaction between the electrolyte and the lithium metal layer. As a result, while effectively achieving the improvement of output characteristics due to the high-concentration lithium salt electrolyte, it is possible to effectively suppress the deterioration of lifetime characteristics due to the increase in the loss volume of lithium.

On the other hand, the kind of a non-aqueous organic solvent that can be included in the electrolyte is not particularly limited, and any organic solvent that has been known to be applicable to the electrolyte of a lithium ion battery can be used. Examples of such organic solvents include at least one selected from the group consisting of a carbonate-based solvent, an ether-based solvent, a nitrile-based solvent, a phosphate-based solvent, and a sulfone-based solvent. However, in consideration of the stability of the lithium metal layer, the non-aqueous organic solvent preferably includes an ether-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulfolane, or the like.

Meanwhile, the lithium metal secondary battery of other embodiments described above may further include a porous separator interposed between the positive electrode and the negative electrode.

Such a porous separator can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separator, and it may be more preferable to apply a porous glass filter (glass fiber non-woven fabric) as a separator. The separator may be an insulating thin film having high ion permeability and mechanical strength, and the pore diameter of the separator may generally range from 0.01 to 10 µm, and the thickness may generally range from 5 to 300 µm, but are not limited thereto.

In addition, in the other embodiments of the lithium metal secondary battery, the separator may be integrated with the electrolyte and interposed between the positive electrode and the negative electrode in the form of an electrolyte membrane or an electrolyte film. At this time, the electrolyte membrane or the electrolyte film may be a form containing the above-mentioned lithium salt and non-aqueous organic solvent in a polymer matrix, and as the polymer matrix, a well-known polymer-based solid electrolyte or the like may be used. In this case, the lithium metal secondary battery of the other embodiment may be a semi-solid-state battery that uses a liquid electrolyte and a solid electrolyte in combination.

Meanwhile, the lithium metal secondary battery of the other embodiment can be manufactured according to a conventional method in the art. For example, the lithium secondary battery can be prepared by housing an electrode assembly including a positive electrode, a negative electrode, and a separator in a case, and injecting and impregnating the above-mentioned electrolyte in the case.

Such a lithium metal secondary battery can be applied not only to a battery cell used as power sources for small-sized devices, but can also be particularly suitably used as a unit battery in a battery module, which is a power source for medium-sized and large-sized devices.

Hereinafter, preferred examples of the invention, comparative examples, and experimental examples for evaluating them will be described. However, the following examples are only a preferred embodiment of the invention, and are not intended to limit the scope of the invention.

### Comparative Example 1: Negative electrode for lithium metal secondary battery (lithium-free secondary battery)

A copper foil itself having a thickness of 10 µm was used as the negative electrode of Comparative Example 1.

### Comparative Examples 2 to 4: Negative electrode for lithium metal secondary battery

A half-cell was manufactured using a copper foil having a thickness of 10 µm as one electrode and using a lithium foil having a thickness of 150 µm as the other electrode. The half-cell was manufactured to include a porous polypropylene separator interposed between the two electrodes and an electrolyte in which a lithium salt of LiFSI was dissolved in dimethoxyethane(DME) at a concentration of 4M.

While charging and discharging the half-cell at a capacity of 1 mAh/cm² (Comparative Example 2), a capacity of 3 mAh/cm² (Comparative Example 3), and a capacity of 4 mAh/cm² (Comparative Example 4) under application of a current of 1.0 mA/cm², a lithium metal layer was electrodeposited on the copper foil layer to manufacture the negative electrodes of Comparative Examples 2 to 4. The electrodeposition and formation thickness of each lithium metal layer was confirmed to be 5 µm (Comparative Example 2), 15 µm (Comparative Example 3), and 20 µm (Comparative Example 4), respectively.

### Reference Example 1: Negative electrode for lithium metal secondary battery (lithium-free secondary battery)

First, WO₃ was thermally evaporated on a copper foil having a thickness of 10 µm, while monitoring the evaporation thickness and evaporation speed in real time using a quartz crystal microbalance (QCM) to thereby form a tungsten oxide layer having a thickness of 20nm. This was used as the negative electrode of Reference Example 1.

### Example 1, Reference Examples 2 and 3: Negative electrode for lithium metal secondary battery

A half-cell was manufactured using the negative electrode of Reference Example 1 as one electrode and using a lithium foil having a thickness of 150 µm as the other electrode. The half-cell was manufactured to include a porous polypropylene separator interposed between the two electrodes and an electrolyte in which a lithium salt of LiFSI was dissolved in dimethoxyethane(DME) at a concentration of 4M.

While charging and discharging the half-cell at a capacity of 1 mAh/cm² (Example 1), a capacity of 3 mAh/cm² (Reference Example 2), and a capacity of 4 mAh/cm² (Reference Example 3) under application of a current of 1.0 mA/cm², a lithium metal layer was electrodeposited on the copper foil layer to manufacture the negative electrodes of Examples 1, and Reference Examples 2 and 3, respectively. The electrodeposition and formation thickness of each lithium metal layer was confirmed to be 5 µm (Example 1), 15 µm (Reference Example 2), and 20 µm (Reference Example 3), respectively.

### Experimental Example 1: Evaluation of surface work function

The negative electrodes of Comparative Examples 1 to 4, Reference Examples 1 to 3, and Example 1 were analyzed by an UPS (Ultraviolet Photoelectron Spectroscopy) to measure the surface work function(eV), and the measurement results are shown in FIG. 2. For Comparative Example 1 and Reference Example 1, the work function of the copper foil and tungsten oxide layer surface was measured, respectively. In addition, for Comparative Examples 2 to 4, Reference Examples 2 and 3, and Example 1, lithium electrodeposited on the copper foil or tungsten oxide layer was collected and washed, and then analyzed by UPS to measure the surface work function of the lithium metal layer.

Referring to FIG. 2, it was confirmed that the surface work function of the lithium metal layer appears to be the largest in Comparative Example 2 having the smallest electrodeposition capacity and the thinnest thickness among Comparative Examples 2 to 4. In addition, it was confirmed that the surface work function of the lithium metal layer decreases as the thickness of the lithium metal layer increases, and this tendency also appears in the similar manner in Example 1, Reference Examples 2 and 3, in which a tungsten oxide layer was further formed.

In addition, referring to Example 1, Reference Examples 2 and 3, it was confirmed that the surface work function of the lithium metal layer further increases as a tungsten oxide layer (interface layer) is further formed between the copper foil and the lithium metal layer. As a result, it was confirmed that Example 1 has the largest surface work function of the lithium metal layer and shows the most remaining reactivity.

### Experimental Example 2: Evaluation of the thickness of solid interface electrolyte layer

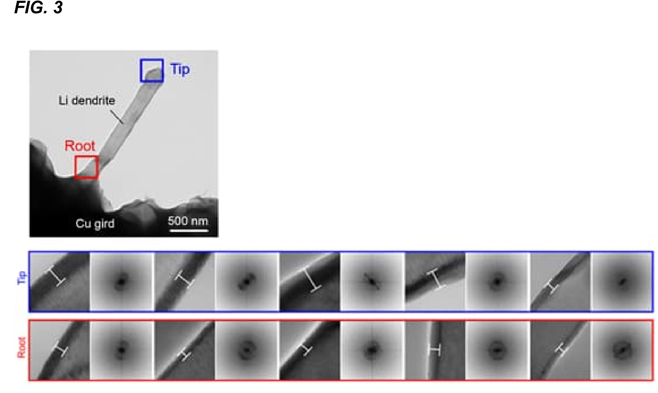

In the process of manufacturing the negative electrode of Comparative Example 2, a TEM Cu grid was inserted on a copper foil having a thickness of 10 µm, and electrodeposition and formation of a lithium metal layer were performed. As a result, a lithium metal layer was also formed on the Cu grid, and this sample was collected and washed, then placed in liquid nitrogen and transferred to a TEM analysis device, and the lithium metal layer formed on the Cu grid and the solid electrolyte interphase on its surface were analyzed using a cryo-TEM. For reference, the TEM image is shown in FIG. 3.

Referring to FIG. 3, it was confirmed that a thinner solid electrolyte interface was formed on the surface of the lithium metal layer close to the Cu grid (i.e., the lithium metal layer surface with a thin thickness), and that a thicker solid electrolyte interphase was formed on the surface of the lithium metal layer far from the Cu grid (i.e., the lithium metal layer surface with a large thickness).

Through this, it was confirmed that the lithium metal layer with a thinner thickness and a large surface work function has relatively low reactivity, and thus a thinner solid electrolyte interphase is formed.

### Experimental Example 3: Evaluation of lifetime characteristics of lithium metal secondary battery (lithium-free secondary battery)

First, LiNi_{0.5}Co_{0.2}Mn_{0.3}O₂ was used as the positive electrode active material, carbon black as the conductive material, and PVDF polymer as the binder, respectively. The positive electrode active material: conductive material: binder were mixed in a weight ratio of 90:5:5 in an N-methylpyrrolidone solvent to prepare a slurry composition, which was then applied to an aluminum current collector, and then dried and rolled in a vacuum oven at 110°C to prepare a positive electrode.

A porous polypropylene separator was interposed between the positive electrode and the negative electrode prepared in Reference Example 1 or Comparative Example 1 to prepare an electrode assembly, which was then placed inside a case. An electrolyte in which a lithium salt of LiFSI was dissolved in dimethoxyethane (DME) at a concentration of 4M was then injected to prepare a full cell of a lithium metal secondary battery (N/P: 2.08, electrolyte/positive electrode ratio: 2.0 g/Ah).

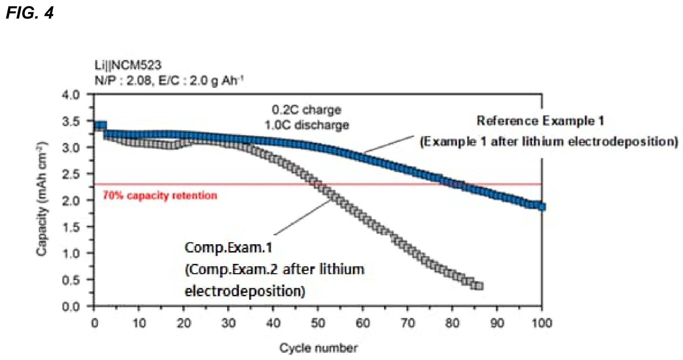

A charge and discharge test was performed for the lithium metal secondary battery by charging up to 4.35V under CC mode and 0.2C at 25°C and discharging up to 3.0V at a constant current of 1.0C. While performing a charge and discharge test for 100 cycles, the capacity retention for each cycle was measured, and the measurement results are shown in FIG. 4. As this charge and discharge proceeded, a lithium metal layer was electrodeposited and formed on the negative electrode to form a lithium metal layer of the same form as in Example 1 and Comparative Example 2.

Referring to FIG. 4, it was confirmed that the lithium metal secondary battery (lithium-free secondary battery) including the negative electrode of Reference Example 1 (Example 1) exhibits superior lifetime characteristics compared to the battery including the negative electrode of the Comparative Example.

## Claims

1. A negative electrode for a lithium metal secondary battery comprising:
a conductive metal layer including a first metal;
an interface layer formed on the conductive metal layer, and including a second metal oxide having a work function larger than that of the first metal; and
a lithium metal layer formed on the interface layer and having a surface work function greater than 3.0 eV.

2. The negative electrode for a lithium metal secondary battery according to claim 1, wherein the first metal includes a copper(Cu).

3. The negative electrode for a lithium metal secondary battery according to claim 1, wherein the second metal oxide has a work function of 6.0 eV or more and a band gap of 2.7 eV or more.

4. The negative electrode for a lithium metal secondary battery according to claim 1, wherein the second metal oxide includes nickel oxide (NiO), molybdenum oxide (MoO₃), or tungsten oxide(WO₃).

5. The negative electrode for a lithium metal secondary battery according to claim 1, wherein the interface layer has a thickness of 10 nm to 1 µm.

6. The negative electrode for a lithium metal secondary battery according to claim 1, wherein the lithium metal layer has a thickness of 10 nm to 10 µm.

7. The negative electrode for a lithium metal secondary battery according to claim 1, wherein the lithium metal layer is electrodeposited and formed on the interface layer according to the charge and discharge of the secondary battery.

8. The negative electrode for a lithium metal secondary battery according to claim 7, wherein the lithium metal layer is electrodeposited and formed on the interface layer at a capacity of 1 to 2.5 mAh/cm².

9. A lithium metal secondary battery comprising:
the negative electrode according to any one according to claims 1 to 8;
a positive electrode facing the negative electrode;
an electrolyte including a lithium salt and a non-aqueous organic solvent; and
a separator between the positive electrode and the negative electrode.

10. The lithium metal secondary battery according to claim 9, wherein the positive electrode includes lithium; and a lithium metal oxide containing two or more metals selected from the group consisting of nickel, manganese, cobalt, and aluminum, and
the lithium metal oxide includes 50 mol% or more of nickel based on the total metal content excluding lithium.

11. The lithium metal secondary battery according to claim 9, wherein the lithium salt is included in the electrolyte at a concentration of 1M to 6M.

12. The lithium metal secondary battery according to claim 9, wherein the non-aqueous organic solvent includes at least one selected from the group consisting of a carbonate-based solvent, an ether-based solvent, a nitrile-based solvent, a phosphate-based solvent, and a sulfone-based solvent.
